# EUROPÄISCHE PATENTANMELDUNG

(11) **EP 4 112 948 A1**
(43) Veröffentlichungstag der Anmeldung: **04.01.2023**
(21) Anmeldenummer: 22181137.5
(22) Anmeldetag: 27.06.2022
(51) Int. Cl.: F16B 13/06, F16B 13/04, E04B 1/76, F16B 13/12, F16B 13/08

(54) **DÄMMSTOFFANKER UND BEFESTIGUNGSSYSTEM**

(30) Priorität: 02.07.2021 DE 102021117065; 03.06.2022 DE 102022114056
(71) Anmelder: fischerwerke GmbH & Co. KG, 72178 Waldachtal (DE)
(72) Erfinder: Duffner, Philipp, 72181 Starzach (DE)
(74) Vertreter: Suchy, Ulrich Johannes

(57) **Zusammenfassung**

Die Erfindung schlägt vor, einen Dämmstoffanker (1) zu einer Befestigung einer Dämmstoffplatte an einer Gebäudewand mit ausknickenden Kniehebeln (6), die die Dämmstoffplatte in Richtung der Gebäudewand beaufschlagen, und mit ausschwenkenden Ankerelementen (7), die eine gute Verankerung des Dämmstoffankers (1) in der Dämmstoffplatte erzielen, auszubilden.

## Beschreibung

Die Erfindung betrifft einen Dämmstoffanker mit den Merkmalen des Oberbegriffs des Anspruchs 1 sowie ein Befestigungssystem gemäß dem Oberbegriff des Anspruchs 14.

Dämmstoffanker dienen zur Befestigung von Dämmelementen zur Wärmedämmung, wie beispielsweise Dämmstoffplatten. Gattungsgemäße Dämmstoffanker werden im Dämmelement verankert und ermöglichen so die Befestigung des Dämmelementes beispielsweise an einer Gebäudewand oder an einer an der Gebäudewand angebrachten Unterkonstruktion aus Holz mithilfe eines Befestigungselements, insbesondere mit einer Schraube oder einem Nagel. Der Dämmstoffanker und das Befestigungselement bilden gemeinsam ein Befestigungssystem zur Befestigung von Dämmelementen.

Die Offenlegungsschrift DE 10 2009 044 304 A1 offenbart einen Dämmstoffanker mit Kniehebeln, die sich zwischen zwei gleichachsigen Hülsen an zwei entfernten Enden der Kniehebel erstrecken. Die Kniehebel sind achsparallel zu einer Ankerachse des Dämmstoffankers verteilt um die Ankerachse herum angeordnet und weisen jeweils zwei Hebelelemente auf, die durch ein Kniegelenk gelenkig miteinander verbunden sind. Dem Kniegelenk ferne Enden der Hebelelemente sind gelenkig mit den beiden Hülsen des Dämmstoffankers verbunden, derart, dass die Kniehebel ausknicken, wenn die beiden Hülsen einander axial genähert werden. Beim Ausknicken, das auch als Aufspreizen der Kniehebel beziehungsweise des Dämmstoffankers aufgefasst werden kann, entfernen sich die Kniegelenke der Kniehebel radial von der Ankerachse. Wird der Dämmstoffanker in einer Dämmstoffplatte aufgespreizt, dringen die Kniehebel durch das Aufspreizen radial von der Ankerachse weg in die Dämmstoffplatte ein, wodurch der Dämmstoffanker axial in der Dämmstoffplatte befestigt, das heißt verankert ist. Mit einer axial in einer Aufnahmeöffnung durch die Hülsen durchgeführten Schraube lässt sich die Dämmstoffplatte über den in ihr verankerten Dämmstoffanker an einer Unterkonstruktion aus Holz oder mit einem Spreizdübel an einer Gebäudewand befestigen.

Das europäische Patent EP 2 570 682 B1 offenbart einen Dämmstoffanker mit einer Ankerhülse, die an einem hinteren Ende von einem kreisrunden in einen quadratischen Querschnitt übergeht. Im Bereich des quadratischen Querschnitts ist die Ankerhülse an Kanten achsparallel geschlitzt, wodurch Ankerelemente gebildet sind, die von einer Ankerachse weg nach außen schwenkbar sind, was ebenfalls als Aufspreizen aufgefasst werden kann. Zum Aufspreizen der Ankerelemente weist der bekannte Dämmstoffanker ein Spreizelement mit einer axialen Aufnahmeöffnung auf, von dem Spreizkeile in zwei einander rechtwinkligen Axialebenen abstehen. Mit einer Schraube, die zu einer Befestigung des Dämmstoffankers an beispielsweise einer Gebäudewand durch das Spreizelement und durch die Ankerhülse durchgeführt ist oder wird, lässt sich das Spreizelement zwischen die Ankerelemente bewegen, wobei die Spreizkeile die Ankerelemente von der Ankerachse weg nach außen drücken, das heißt Aufspreizen.

Aufgabe der Erfindung ist es, einen Dämmstoffanker der vorstehend erläuterten Art hinsichtlich einer Verankerung in einer Dämmstoffplatte und einer Befestigung der Dämmstoffplatte an beispielsweise einer Gebäudewand zu verbessern.

Diese Aufgabe wird erfindungsgemäß durch einen Dämmstoffanker mit den Merkmalen des Anspruchs 1 sowie durch ein Befestigungssystem gemäß Anspruch 14 gelöst. Der erfindungsgemäße Dämmstoffanker ist zu einer Verankerung in einem Dämmelement zum Zweck einer Befestigung des Dämmelements, beispielsweise einer Dämmstoffplatte, an beispielsweise einer Gebäudewand vorgesehen. Insbesondere dann, wenn die Dämmstoffplatte mit der Gebäudewand mit einem Klebstoff verklebt wird, kann die Dämmstoffplatte mit dem Dämmstoffanker beim Verkleben gegen die Gebäudewand gedrückt werden, um eine möglichst gute Verklebung zu erreichen.

Der erfindungsgemäße Dämmstoffanker bildet mit einem stiftförmigen Befestigungselement das Befestigungssystem, insbesondere mit einem Nagel oder eine Schraube. Der Dämmstoffanker weist eine Aufnahmeöffnung zur Aufnahme des stiftförmigen Befestigungselements auf, die sich entlang einer Ankerachse des Dämmstoffankers erstreckt. Ankerachse steht hier synonym für "Längsachse". Das stiftförmige Befestigungselement dient zu einer Befestigung des Dämmstoffankers an einer Gebäudewand und/oder einer daran angebrachten Unterkonstruktion, allgemein zur Verankerung des Dämmstoffankers in einem Verankerungsgrund, beispielsweise in Holz. Das stiftförmige Befestigungselement ist insbesondere eine Schraube oder ein Nagel. Der erfindungsgemäße Dämmstoffanker weist zudem einen Kniehebel, der sich vorzugsweise achsparallel oder jedenfalls in einer Längsrichtung des Dämmstoffankers erstreckt, und ein Ankerelement auf. Der Kniehebel weist zwei Hebelelemente auf, die durch ein Kniegelenk gelenkig miteinander verbunden sind, derart, dass sich der Kniehebel ausknicken lässt, wobei sich ein radialer Abstand des Kniegelenks von einer Ankerachse des Dämmstoffankers vergrößert. Dieses Ausknicken kann auch als Aufspreizen des Kniehebels beziehungsweise des Dämmstoffankers aufgefasst werden. Bei einem Aufspreizen in einer Dämmstoffplatte dringt der Kniehebel radial von der Ankerachse weg in die Dämmstoffplatte ein. Beim Ausknicken beziehungsweise Aufspreizen bewegen sich das Kniegelenk und die beiden Hebelelemente nicht nur radial zur Ankerachse, sondern sie verlagern sich auch in axialer Richtung, wodurch die Dämmstoffplatte in Richtung der Gebäudewand beaufschlagt und gegen die Gebäudewand gepresst wird.

Zum Aufspreizen ist das Ankerelement um eine erste Schwenkachse schwenkbar derart, dass sich ein radialer Abstand eines der ersten Schwenkachse fernen Endes des Ankerelements von der Ankerachse vergrößert. Zum Aufspreizen des Ankerelements weist der erfindungsgemäße Dämmstoffanker ein Spreizelement auf, das in Richtung der Ankerachse des Dämmstoffankers verschiebbar ist und das zu einem keilartigen Aufspreizen des Ankerelements in einer Spreizrichtung verschoben wird, wobei es zu einem mittelbaren oder unmittelbaren Gleiten zwischen dem Ankerelement und dem Spreizelement kommt, und wobei es das Ankerelement derart um die erste Schwenkachse schwenkt, dass sich der radiale Abstand des der ersten Schwenkachse fernen Endes des Ankerelements von der Ankerachse vergrößert. Insbesondere erfolgt die Bewegung des Spreizelements zum Aufspreizen des Ankerelements durch eine gleichzeitige Bewegung des Befestigungselements, insbesondere beim Verankern des Dämmstoffankers im Verankerungsgrund. Die Schwenkbewegung des Ankerelements kann ebenfalls als Aufspreizen des Ankerelements beziehungsweise des Dämmstoffankers aufgefasst werden. Das Ankerelement kann eine größere Spreizweite und/oder eine größere Fläche aufweisen als der Kniehebel und auf diese Weise einen Halt des Dämmstoffankers in axialer Richtung in der Dämmstoffplatte, das heißt die Verankerung des Dämmstoffankers in der Dämmstoffplatte, verbessern. Die "Spreizrichtung" ist eine Bewegung des Spreizelements in Richtung der Ankerachse in einer Richtung, die das Aufspreizen des Ankerelements bewirkt.

Die Erfindung kombiniert einen guten Halt des Dämmstoffankers in axialer Richtung in der Dämmstoffplatte durch das in der Dämmstoffplatte aufgespreizte Ankerelement und den in der Dämmstoffplatte aufgespreizten Kniehebel mit einer Beaufschlagung der Dämmstoffplatte in Richtung der Gebäudewand beim Verankern des Dämmstoffankers in der Dämmstoffplatte durch das Aufspreizen des Kniehebels in der Dämmstoffplatte. Dabei kann durch die erfindungsgemäße Ausbildung des Dämmstoffankers mit Kniehebel und Ankerelement der Querschnitt des Dämmstoffankers vor dem Aufspreizen klein gehalten werden, so dass der Dämmstoffanker die Dämmstoffplatte beim Einbringen nur geringfügig beschädigt, was das nachfolgende Verputzen der Dämmstoffplatte vereinfacht.

Vorzugsweise weist der erfindungsgemäße Dämmstoffanker mehrere Kniehebel und/oder mehrere Ankerelemente auf, die insbesondere gleichmäßig in Umfangsrichtung um die Ankerachse herum verteilt angeordnet sind. Beispielsweise ist in einer Umfangsrichtung des Dämmstoffankers gesehen ein Ankerelement zwischen zwei Kniehebeln angeordnet und/oder umgekehrt. Eine Ausgestaltung der Erfindung sieht Paare einander bezüglich der Ankerachse gegenüber angeordneter und in entgegengesetzten Richtungen aufspreizbarer Kniehebel und/oder Ankerelemente vor. Beispielsweise sind zwei Kniehebel einander bezüglich der Ankerachse gegenüber in einer ersten Axialebene und zwei Ankerelemente einander bezüglich der Ankerachse gegenüber in einer zweiten Axialebene des Dämmstoffankers angeordnet, wobei die beiden Axialebenen einander beispielsweise senkrecht kreuzen.

Als Spreizelement zum Aufspreizen des Ankerelements oder der Ankerelemente sieht eine Ausgestaltung der Erfindung eine zu der Ankerachse koaxial und axial zur Ankerachse verschiebbare Schiebehülse vor. Die Schiebehülse wird vorzugsweise von dem stiftförmigen Befestigungselement in der Spreizrichtung verschoben und beaufschlagt das Ankerelement an einer der Ankerachse zugewandten Innenseite des Ankerelements von der Ankerachse weg nach außen.

Insbesondere weist die Schiebehülse mindestens einen radial abstehenden Flügel auf, der bei Aufspreizen in eine Führungsnut auf der Innenseite des Ankerelements eingreift. Dadurch ist die Schiebehülse zum Ankerelement geführt, so dass sichergestellt ist, das Ankerelement beim Aufspreizen in die planmäßige Stellung verschoben wird und es nicht in eine unerwünschte Richtung ausweicht.

Auf seiner Außenseite kann das Ankerelement mindestens eine Verstärkungsrippe aufweisen. Die Verstärkungsrippe verläuft in axialer Richtung und erhöht das Trägheitsmoment des Ankerelements, beziehungsweise sie verringert die Durchbiegung des Ankerelements, ohne dessen Querschnitt stark zu erhöhen, was zu einer größeren Beschädigung der Dämmstoffplatte beim Einbringen des Dämmstoffankers in die Dämmstoffplatte führen würde.

Eine Weiterbildung der Erfindung sieht vor, dass das Spreizelement vor dem Aufspreizen über eine Sollbruchstelle mit dem Ankerelement verbunden ist, die bei der Verschiebung des Ankerelements in der Spreizrichtung zerstört wird. Die Sollbruchstelle verhindert, dass das Ankerelement vorzeitig, bereits beim Einbringen des Dämmstoffankers in die Dämmstoffplatte durch das Spreizelement aufgespreizt wird, was ein Einbringen behindern und die Dämmstoffplatte beschädigen würde.

Ebenfalls eine Weiterbildung der Erfindung sieht vor, dass das Spreizelement gelenkig mit dem oder den Kniehebel/n verbunden ist. Das Spreizelement ist insbesondere gelenkig mit einem dem Kniegelenk fernen Ende eines ersten der beiden Hebelelemente oder jedenfalls in einem Abstand von dem Kniegelenk eines ersten der beiden Hebelelemente des oder der Kniehebel verbunden.

Eine Weiterbildung der Erfindung sieht eine zu der Ankerachse koaxiale Festhülse vor, die sich insbesondere bei der Befestigung eines Dämmelements axial am Verankerungsgrund abstützt, und deren Lage hierbei insbesondere ortsfest zum Verankerungsgrund ist, weswegen sie hier als "Festhülse" bezeichnet wird. Die Schiebehülse ist relativ zur Festhülse axial, in Richtung der Ankerachse verschiebbar und lässt sich zum Aufspreizen des oder der Kniehebel und des oder der Ankerelemente der Festhülse axial nähern. Die Näherung der Schiebehülse zur Festhülse erfolgt insbesondere durch eine Relativbewegung des stiftförmigen Befestigungselements zur Festhülse. Dadurch wird, sofern vorhanden, die Sollbruchstelle zwischen dem Ankerelement und dem Spreizelement zerstört, so dass das Ankerelement durch das Spreizelement aufgespreizt, also radial nach außen weg beaufschlagt und verschoben werden kann.

Das oder die Ankerelemente sind um die erste/n Schwenkachse/n und ein zweites Hebelelement des oder der Kniehebel/s gelenkig an einem Ende oder jedenfalls in einem Abstand von dem Kniegelenk um eine dritte Schwenkachse schwenkbar mit der Festhülse verbunden.

In bevorzugter Ausgestaltung der Erfindung verbindet/n der oder die Kniehebel die Schiebehülse drehfest mit der Festhülse, um ein Verdrehen der Schiebehülse in Bezug zur Festhülse bei einem Einschrauben einer Schraube als stiftförmigem Befestigungselement zu vermeiden. Zudem oder alternativ sind an der Schiebehülse und/oder der Festhülse Verdrehsicherungselemente, insbesondere in der Form von radial abstehenden Rippen oder Flügeln vorgesehen, die in die Dämmstoffplatte einschneiden und ein Verdrehen der Schiebehülse zur Festhülse beim Einbringen des stiftförmigen Befestigungselements beim Verspreizen verhindert.

Vorzugsweise ist das erste Hebelelement der beiden Hebelelemente in axialer Richtung länger als das zweite Hebelelement. Insbesondere ist das erste Hebelelement um mindestens 20% länger als das zweite Hebelelement. Das erste Hebelelement ist das Hebelelement, das näher an der Schiebehülse angeordnet ist als das zweite Hebelelement. Insbesondere ist das erste Hebelelement einstückig mit der Schiebehülse verbunden. Dadurch, dass das erste Hebelelement kürzer als das zweite Hebelelement ist, kommt es zu einer großen Schwenkbewegung, wobei das zweite Hebelelement, aufgrund des geringeren Schwenkwinkels, das erste Hebelelement stabilisierende und stützende Druckstrebe wirken kann.

Vorzugsweise sind die Festhülse, die Schiebehülse, der oder die Kniehebel und das oder die Ankerelement/e einstückig beispielsweise durch Spritzgießen aus Kunststoff hergestellt. Das ermöglicht eine rationelle und kostengünstige Herstellung des erfindungsgemäßen Spreizankers.

Der oder die Kniehebel und das oder die Ankerelement/e sind vorzugsweise in der Umfangsrichtung gleichmäßig oder ungleichmäßig verteilt um die Ankerachse herum und zwischen der Festhülse und der Schiebehülse angeordnet, wobei die Festhülse und die Schiebehülse axial angeordnet sind.

Vorzugsweise weist der erfindungsgemäße Dämmstoffanker am Spreizelement ein Verdrehsicherungselement auf, insbesondere ein Flügel oder eine Rippe, an dem ein Halteelement angeordnet ist, mit dem das stiftförmige Befestigungselement in der Aufnahmeöffnung des Dämmstoffankers gehalten werden kann. Das Halteelement ist insbesondere hakenförmig ausgebildet und hintergreift einen Kopf des Befestigungselements nach dem Einführen in die Aufnahmeöffnung. Der Kopf weist einen Durchmesser auf, der größer als der Durchmesser der Aufnahmeöffnung ist, so dass der Kopf und somit das Befestigungselement verliersicher in der Aufnahmeöffnung gehalten ist, insbesondere axialfest zum Spreizelement.

Vorzugsweise ist das Halteelement in Umfangsrichtung nicht breiter als das Verdrehsicherungselement und insbesondere steht es zudem in radialer Richtung außen nicht über das Verdrehsicherungselement über, so dass das Halteelement das Einbringen des Dämmstoffankers in die Dämmstoffplatte nicht erschwert und die Dämmstoffplatte nicht beschädigt wird.

Das erfindungsgemäße Befestigungssystem umfasst ein stiftförmiges Befestigungselement, insbesondere einen Nagel oder eine Schraube, und einen Dämmstoffanker zu einer Verankerung in einer Dämmstoffplatte. Der Dämmstoffanker weist eine Aufnahmeöffnung zur Aufnahme des stiftförmigen Befestigungselements auf, die sich entlang der Ankerachse erstreckt, und einen radial zu der Ankerachse aufspreizbaren Kniehebel und/oder ein um eine erste Schwenkachse ausschwenkbares Ankerelement. Zudem weist der Dämmstoffanker ein Halteelement auf, das das Befestigungselement hintergreift, wenn das Befestigungselement in der Aufnahmeöffnung aufgenommen ist und das dadurch das Befestigungselement verliersicher in der Aufnahmeöffnung hält. Insbesondere ist das Halteelement hakenförmig und insbesondere, wie oben beschrieben, an einem Verdrehsicherungselement angeordnet, so das Befestigungssystem kompakt gestaltet werden kann, insbesondere mit einem kleinen Querschnitt, so dass beim Einbringen des Befestigungssystems in eine Dämmstoffplatte die Dämmstoffplatte nicht wesentlich beschädigt wird und das zum Einbringen notwendige Loch möglichst klein gehalten werden kann.

Insbesondere ist der Durchmesser der Aufnahmeöffnung des Dämmstoffankers nicht größer als der Außendurchmesser des Schafts des Befestigungselements. Weist das Befestigungselement ein Außengewinde auf, dann ist der Durchmesser der Aufnahmeöffnung insbesondere größer als der Durchmesser des Außengewindes. Zudem ist der Durchmesser der Aufnahmeöffnung insbesondere kleiner als der Durchmesser eines Kopfs des Befestigungselements.

Vorzugsweise weist der Dämmstoffanker ein Verdrehsicherungselement auf, insbesondere ein Flügel oder eine Rippe, insbesondere an einem Spreizelement, an dem das Halteelement angeordnet ist. Um eine möglichst kompakte Bauweise des Befestigungssystems zu erreichen, ist das Halteelement in Umfangsrichtung insbesondere nicht breiter ist als das Verdrehsicherungselement.

Die vorstehend in der Beschreibung genannten Merkmale und Merkmalskombinationen, Ausführungen und Ausgestaltungen der Erfindung, sowie die nachfolgend in der Figurenbeschreibung genannten und/oder in einer Figur gezeichneten Merkmale und Merkmalskombinationen sind nicht nur in der jeweils angegebenen oder gezeichneten Kombination, sondern auch in grundsätzlich beliebigen anderen Kombinationen oder aber einzeln verwendbar. Es sind Ausführungen der Erfindung möglich, die nicht alle Merkmale eines abhängigen Anspruchs aufweisen. Auch können einzelne Merkmale eines Anspruchs durch andere offenbarte Merkmale oder Merkmalskombinationen ersetzt werden. Ausführungen der Erfindung, die nicht alle Merkmale eines Ausführungsbeispiels, sondern einen grundsätzlich beliebigen Teil der gekennzeichneten Merkmale eines Ausführungsbeispiels aufweisen, sind möglich.

Die Erfindung wird nachfolgend anhand von zwei in der Zeichnung dargestellten Ausführungsbeispielen näher erläutert. Es zeigen:
- Figur 1: einen ersten Dämmstoffanker gemäß der Erfindung in einer Seitenansicht;
- Figur 2: den Dämmstoffanker aus Figur 1 in einer gegenüber Figur 1 um 90° gedrehten Seitenansicht;
- Figur 3: einen vergrößerte Achsschnitt eines Teils des Dämmstoffankers aus Figur 1;
- Figur 4: den in Figur 3 dargestellten Teil des Dämmstoffankers in Seitenansicht mit der gegenüber Figuren 1 und 3 um 90° gedrehten Blickrichtung der Figur 2;
- Figur 5: ein erstes Befestigungssystem mit dem ersten Dämmstoffanker aus Figuren 1 bis 4 bei einem Aufspreizen in einer Dämmstoffplatte;
- Figur 6: ein zweites Befestigungssystem mit einem zweiten erfindungsgemäßen Dämmstoffanker in einer Seitenansicht;
- Figur 7: das zweite Befestigungssystem in einem aufgespreizten Zustand in einer Seitenansicht; und
- Figur 8: das zweite Befestigungssystem in einem aufgespreizten Zustand in einer perspektivischen Ansicht mit einer gegenüber der Figur 7 um circa 90° gedrehten Blickrichtung.

Der in der Zeichnung dargestellte, erfindungsgemäße Dämmstoffanker 1 wird in einer Dämmstoffplatte 2 verankert und dient einer Befestigung der Dämmstoffplatte 2 an beispielsweise einer Gebäudewand 3 oder an einer an der Gebäudewand 3 angeordneten Unterkonstruktion 4.

Im Ausführungsbeispiel ist der Dämmstoffanker 1 einstückig durch Spritzgießen aus Kunststoff hergestellt. Andere Herstellungsverfahren und/oder Werkstoffe schließt die Erfindung nicht aus.

Der Dämmstoffanker 1 weist eine Ankerachse 5, zwei Kniehebel 6, zwei Ankerelemente 7, eine zur Ankerachse 5 koaxiale Schiebehülse 8 an einem hinteren Ende und in axialem Abstand von der Schiebehülse 8 eine Festhülse 9, die ebenfalls koaxial zur Ankerachse 5 ist, an einem vorderen Ende der Kniehebel 6 und Ankerelemente 7 auf. "Hinten" und "vorne" beziehen sich hier auf eine Einbringrichtung, in die der Dämmstoffanker 1 planmäßig in die Dämmstoffplatte 2 eingebracht wird. Das vordere Ende der Kniehebel 6 dringt beim planmäßigen Einbringen somit zeitlich vor dem hinteren Ende der Kniehebel 6 in die Dämmstoffplatte 2 ein, die Festhülse 9 vor der Schiebehülse 8.

Die Kniehebel 6 sind einander bezüglich der Ankerachse 5 gegenüber in einer ersten Axialebene des Dämmstoffankers 1 und die Ankerelemente 7 sind einander ebenfalls bezüglich der Ankerachse 5 gegenüber in einer zweiten Axialebene des Dämmstoffankers 1 angeordnet. Die beiden Axialebenen sind senkrecht zueinander, was allerdings nicht zwingend für die Erfindung ist. In einer Umfangsrichtung gesehen befindet sich jeweils ein Kniehebel 6 zwischen zwei Ankerelementen 7 und umgekehrt.

Die Kniehebel 6 weisen jeweils zwei Hebelelemente 10, 21 auf, deren einander zugewandte Enden durch ein Kniegelenk 11 gelenkig miteinander verbunden sind. Ein dem Kniegelenk 11 fernes Ende eines ersten hinteren Hebelelements 10 der Kniehebel 6 ist um eine zweite Schwenkachse 12 schwenkbar mit der Schiebehülse 8, und ein dem Kniegelenk 11 fernes Ende eines vorderen Hebelelements 21 um eine dritte Schwenkachse 13 schwenkbar mit der Festhülse 9 verbunden. Im ersten Ausführungsbeispiel ist das erste Hebelelement 10 in axialer Richtung kürzer als das zweite Hebelelement 21. Die Schwenkachsen 12, 13 werden durch Filmscharniere definiert, welche als Gelenke wirken. Filmscharniere sind örtlich begrenzte, linienförmige dünne Stellen des Dämmstoffankers 1, die das Schwenken aufgrund ihrer relativ dünnen Materialdicke ermöglichen. Im Ausführungsbeispiel sind die Filmscharniere durch in Umfangsrichtung verlaufende Nuten 14 gebildet. Die Schwenkachsen 12, 13 und eine Schwenkachse des Kniegelenks 11 jedes Kniehebels 6 verlaufen parallel zueinander und tangential zu einem gedachten, zur Ankerachse 5 koaxialen Zylinder jeweils in einer Radialebene zur Ankerachse 5.

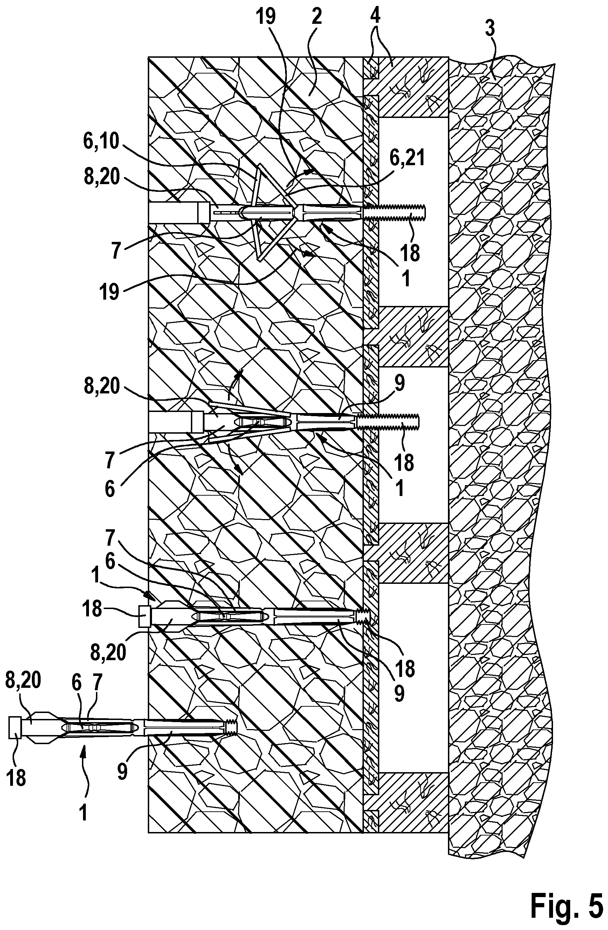

Durch axiales Nähern der Schiebehülse 8 und der Festhülse 9 lassen sich die Kniehebel 6 in entgegengesetzten Richtungen ausknicken, wie es in Figur 5 oben zu sehen ist, wobei sich ein radialer Abstand der Kniegelenke 11 von der Ankerachse 5 vergrößert. Das Ausknicken der Kniehebel 6 kann auch als Aufspreizen der Kniehebel 6 beziehungsweise des Dämmstoffankers 1 aufgefasst werden.

Die Ankerelemente 7 sind im Ausführungsbeispiel zylinderschalenförmige, lang gestreckte Elemente, deren vorderen Enden wie die Kniehebel 6 mit Filmscharnieren als Gelenke um erste Schwenkachsen 15 schwenkbar mit der Festhülse 9 verbunden sind. Auch die ersten Schwenkachsen 15 der Ankerelemente 7 verlaufen tangential zu dem gedachten, zur Ankerachse 5 koaxialen Zylinder in einer Radialebene zur Ankerachse 5, wobei im Ausführungsbeispiel die ersten Schwenkachsen 15 der Ankerelemente 7 um 90° in Umfangsrichtung versetzt zu den zweiten und dritten Schwenkachsen 12, 13 der Hebelelemente 10, 21 der Kniehebel 6 und den Schwenkachsen der Kniegelenke 11 verlaufen. Auf ihren Außenseiten weisen die beiden Ankerelemente 7 je eine in Längsrichtung und parallel zur Ankerachse 5 verlaufende Verstärkungsrippe 27 auf.

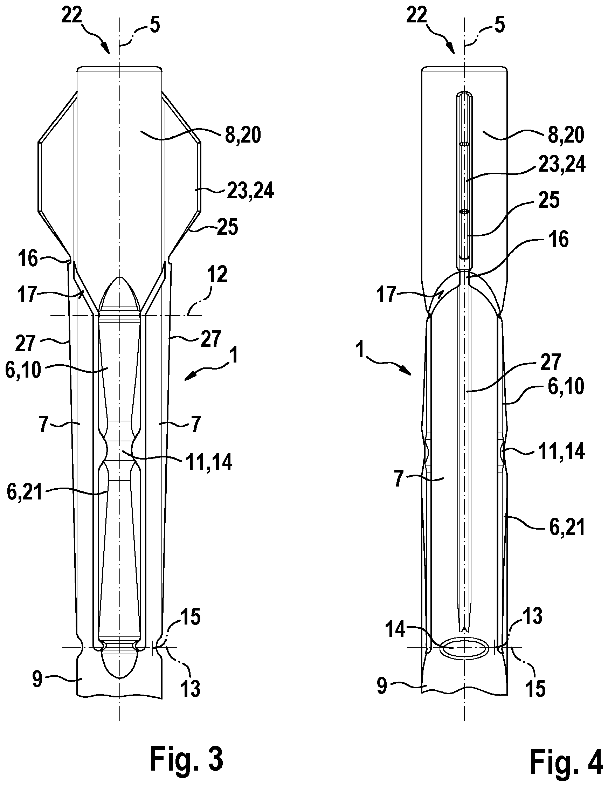

Der Schiebehülse 8 zugewandte hintere Enden der Ankerelemente 7 sind über Sollbruchstellen 16 mit der Schiebehülse 8 verbunden und zwar im Bereich von Einführschrägen 25 von zwei als Flügel 24 ausgeführten Verdrehsicherungselementen 23 (Figur 3). Die Sollbruchstellen 16 sind dünne Stellen an einem Übergang von den Ankerelementen 7, speziell von den Verstärkungsrippen 27 zur Schiebehülse 8, die bei einer Axialverschiebung der Schiebehülse 8 in Bezug zu den Ankerelementen 7 zerstört werden, wodurch der eigentliche Aufspreizvorgang freigeben wird.

An den Enden der Ankerelemente 7 zugewandten Umfangsstellen weist die Schiebehülse 8 an ihrem den Ankerelemente 7 zugewandten Ende keilartige Schrägflächen 17 auf.

Zur Befestigung an der Gebäudewand 3 beziehungsweise an der Unterkonstruktion 4 weist der Dämmstoffanker 1 eine Schraube auf, die hier verallgemeinernd als stiftförmiges Befestigungselement 18 bezeichnet wird. Das stiftförmige Befestigungselement 18 bildet zusammen mit dem ersten erfindungsgemäßen Dämmstoffanker 1 ein erstes Befestigungssystem. Anstelle der Schraube kann der Dämmstoffanker 1 beispielsweise auch einen Nagel als stiftförmiges Befestigungselement aufweisen (nicht dargestellt). Das stiftförmige Befestigungselement 18 ist in einer Aufnahmeöffnung 22 des Dämmstoffankers 1 koaxial zur Ankerachse 5 durch die Schiebehülse 8, zwischen den Kniehebeln 6 und den Ankerelementen 7 hindurch und durch die Festhülse 9 durchgeführt.

Zur Befestigung der Dämmstoffplatte 2 an der Gebäudewand 3 beziehungsweise an der Unterkonstruktion 4 wird der Dämmstoffanker 1 wie in den unteren beiden Bildern der Figur 5 dargestellt planmäßig in Einbringrichtung in die Dämmstoffplatte 2 eingebracht, bis die Festhülse 9 an der Gebäudewand 3 beziehungsweise an der Unterkonstruktion 4 anliegt und eine Art festes Auflager bildet. Zum Einbringen des Dämmstoffankers 1 kann ein Loch in der Dämmstoffplatte 2 angebracht sein. Im Ausführungsbeispiel wird der Dämmstoffanker 1 in die Dämmstoffplatte 2 eingebracht, ohne dass zuvor ein Loch in der Dämmstoffplatte 2 angebracht wird.

Zur Befestigung wird die das stiftförmige Befestigungselement 18 bildende Schraube gedreht und dadurch in die Unterkonstruktion 4 geschraubt. Stattdessen kann auch der nicht dargestellte Nagel als stiftförmiges Befestigungselement durch den Dämmstoffanker 1 in die Unterkonstruktion 4 geschlagen werden (nicht dargestellt). Dabei werden die Sollbruchstellen 16 zerstört und die Schiebehülse 8 wird axial der Festhülse 9 genähert, wie es die beiden oberen Bilder in Figur 5 zeigen, wobei sich die Festhülse 9 an der Unterkonstruktion 4 abstützt und infolge dessen nicht bewegt, weswegen sie hier als Festhülse 9 bezeichnet worden ist. Durch das Einschrauben der Schraube in die Unterkonstruktion 4 wird die Schiebehülse 8 mit dem an der Schiebehülse 8 anliegenden Schraubenkopf zur Festhülse 9 hinbewegt. Bei der axialen Näherung der Schiebehülse 8 an die Festhülse 9 knicken, wie oben beschrieben, die Kniehebel 6 aus, sie werden aufgespreizt und dringen dabei radial zur Ankerachse 5 und mit den Kniegelenken 11 voraus in die Dämmstoffplatte 2 ein, wie es das obere Bild in Figur 5 zeigt. Die in die Dämmstoffplatte 2 eingedrungenen Kniehebel 6 verankern den Dämmstoffanker 1 axial in der Dämmstoffplatte 2.

Die Kniehebel 6 verbinden die Schiebehülse 8 mit der Festhülse 9. Ebenfalls verbinden die Ankerelemente 7, solange die Sollbruchstellen 16 nicht zerstört sind, die Schiebehülse 8 drehfest mit der Festhülse 9. Dadurch ist der Dämmstoffanker 1 in sich stabil ausgebildet, so dass er ohne auszuknicken in den Dämmstoff eingeschoben werden kann.

Beim Einbringen schneiden die Flügel der Schiebehülse 8, wie auch Flügel 29 der Festhülse 9, als Verdrehsicherungselemente 23 in die Dämmstoffplatte 2 ein, so dass die Festhülse 9 und die Schiebehülse 8 bezüglich der Ankerachse 5 zueinander drehfest ausgereichtet sind, so dass sie sich auch beim Einschrauben des Befestigungselements 18 nicht um die Ankerachse 5 zueinander verdrehen. Zudem verhindert die Verbindung der Schiebehülse 8 mit der Festhülse 9, dass bei dem Drehen der das stiftförmige Befestigungselement 18 bildenden Schraube in der Schiebehülse 8 die Schiebehülse 8 mit der Schraube mitdreht.

Beim Verschieben der Schiebehülse 8 in Bezug zu den Ankerelementen 7 werden die Sollbruchstellen 16, die die Enden der Ankerelemente 7 mit der Schiebehülse 8 verbinden, zerstört, so dass die Ankerelemente 7 aufspreizen können. In diesem Zustand halten die Verdrehsicherungselemente 23 die Schiebehülse 8 gegenüber der Festhülse 9 drehfest.

Beim Ausknicken schwenken die um die dritten Schwenkachsen 13 schwenkbar mit der Festhülse 9 verbundenen zweiten Hebelelemente 21 der Kniehebel 6 kreisbogenförmig um die dritten Schwenkachsen 13 nach außen, wie es die Kreispfeile 19 im oberen Bild der Figur 5 darstellen. Dabei bewegen sich die schwenkbar mit der Festhülse 9 verbundenen zweiten, vorderen Hebelelemente 21 sowohl radial von der Ankerachse 5 weg nach außen als auch achsparallel in Richtung der Unterkonstruktion 4 beziehungsweise der Gebäudewand 3. Durch letztere Bewegung der schwenkbar mit der Festhülse 9 verbundenen zweiten Hebelelemente 21 der Kniehebel 6 beaufschlagen die zweiten Hebelelemente 21 die Dämmstoffplatte 2 in Richtung der Unterkonstruktion 4, wodurch die Dämmstoffplatte 2 an der Unterkonstruktion 4 anliegt und gegen die Unterkonstruktion 4 beaufschlagt wird.

Die Schiebehülse 8 bildet mit ihren keilartigen Schrägflächen 17 ein Spreizelement 20 für die Ankerelemente 7, die die Ankerelemente 7 an ihren der Schiebehülse 8 zugewandten Enden beginnend radial von der Ankerachse 5 weg nach außen auseinanderdrückt, das heißt aufspreizt, wenn die das Spreizelement 20 bildende Schiebehülse 8 bei der axialen Näherung an die Festhülse 9 zwischen die Ankerelemente 7 bewegt wird. Dabei kommt es zu einem Gleiten zwischen den Ankerelementen 7 und dem Spreizelement 20. Dieses keilartige Aufspreizen der Ankerelemente 7, bei dem die Ankerelemente 7 um die ersten Schwenkachsen 15 nach außen von der Ankerachse 5 weg schwenken, zeigt das zweite Bild von oben in Figur 5, das den Dämmstoffanker 1 gegenüber den anderen Bildern der Figur 5 um 90° um die Ankerachse 5 gedreht zeigt. Durch ihre großen Flächen geben die aufgespreizten Ankerelemente 7 dem Dämmstoffanker 1 einen guten Halt in axialer Richtung in der Dämmstoffplatte 2.

Die in die Unterkonstruktion 4 geschraubte Schraube, die das stiftförmige Befestigungselement 18 bildet, hält den Dämmstoffanker 1 und über den in die Dämmstoffplatte 2 aufgespreizten Dämmstoffanker 1 die Dämmstoffplatte 2 an der Unterkonstruktion 4.

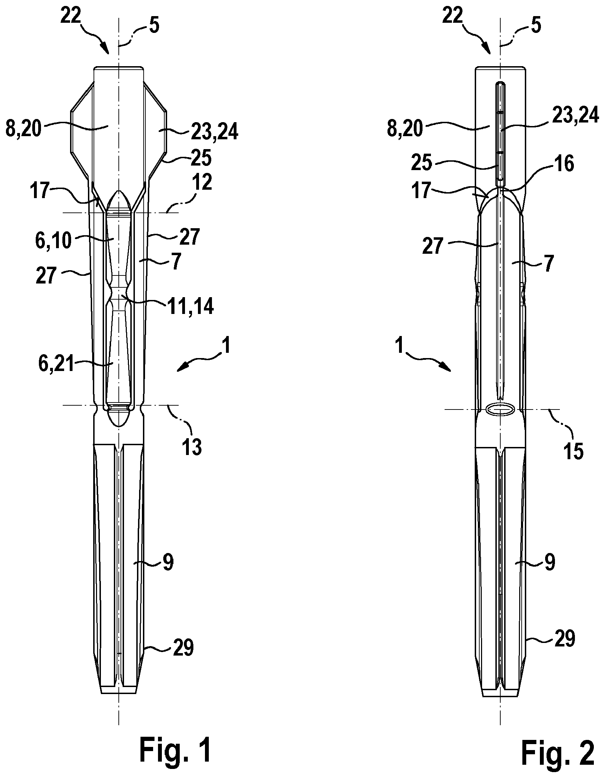

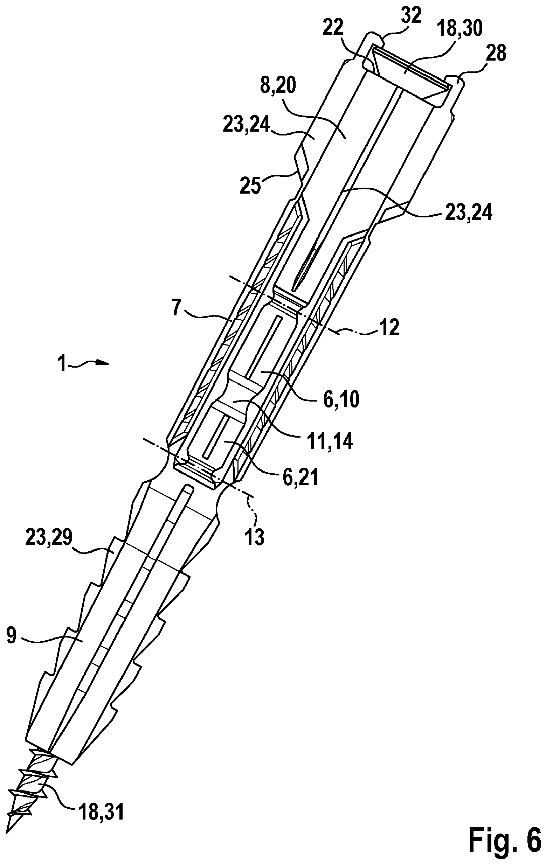

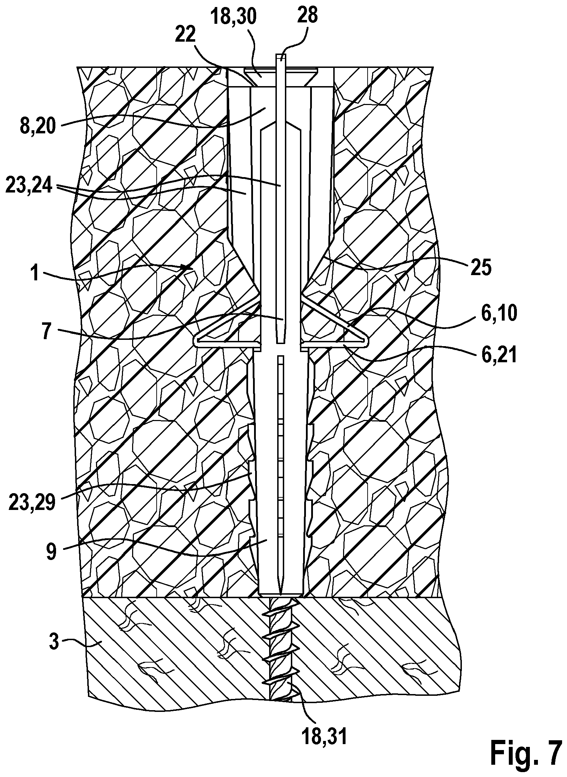

In den Figuren 6 bis 8 ist ein erfindungsgemäßes Befestigungssystem dargestellt, das einen zweiten erfindungsgemäßen Dämmstoffanker 1 und eine zweites Befestigungselement 18, ebenfalls eine Schraube, umfasst. Um Wiederholungen zu vermeiden, wird nachfolgend nur auf die Unterschiede zu dem in den Figuren 1 bis 5 dargestellten Dämmstoffanker 1 beziehungsweise dem ersten Befestigungssystem eingegangen.

Der Dämmstoffanker 1 weist ebenfalls zwei Kniehebel 6 auf, die zwischen zwei Ankerelementen 7 angeordnet sind. Die Kniehebel 6 sind allerdings axial kürzer, das heißt, der Abstand zwischen der zweiten Schwenkachse 12 und der dritten Schwenkachse 13 ist geringer als beim ersten Dämmstoffanker 1 der Figuren 1 bis 5. Zudem ist das erste Hebelelement 10 beim zweiten Dämmstoffanker 1 der Figuren 6 bis 8 kürzer als das zweite Hebelelement 21, so dass das zweite Hebelelement 21 nach dem Aufspreizen in etwa radial zur Ankerachse 5 und leicht nach vorne geneigt, wodurch die Dämmstoffplatte 2 gegen die Gebäudewand 3 gedrückt wird.

An der Festhülse 9 und an der Schiebehülse 8 sind je vier Flügel 24, 29 als Verdrehsicherungselemente 23 angeordnet, die beim Einschrauben des stiftförmigen Befestigungselements 18 in die Gebäudewand 3 aus Holz, hier einer Holzschraube, deren Spitze 31 bereits vor dem Einbringen des Dämmstoffankers 1 in die Dämmstoffplatte 2 aus dem Dämmstoffanker 1 nach vorne übersteht (Figur 6), ein Verdrehen der Schiebehülse 8 um die Ankerachse 5 relativ zur Festhülse 9 verhindert. Zudem greifen die Einführschrägen 25 von zwei der Flügel 24 der Schiebehülse 8 beim und nach dem Aufspreizen in Führungsnuten 26 ein, die auf Innenseiten der Ankerelemente 7 ausgebildet sind. Die Ankerelemente 7 sind einstückig mit der Festhülse 9 und durch den formschlüssigen Eingriff der Flügel 24 in die Führungsnuten 26 ist die Schiebehülse 8 zusätzlich gegen ein Verdrehen gegenüber der Festhülse 9 und die Ankerachse 5 gesichert.

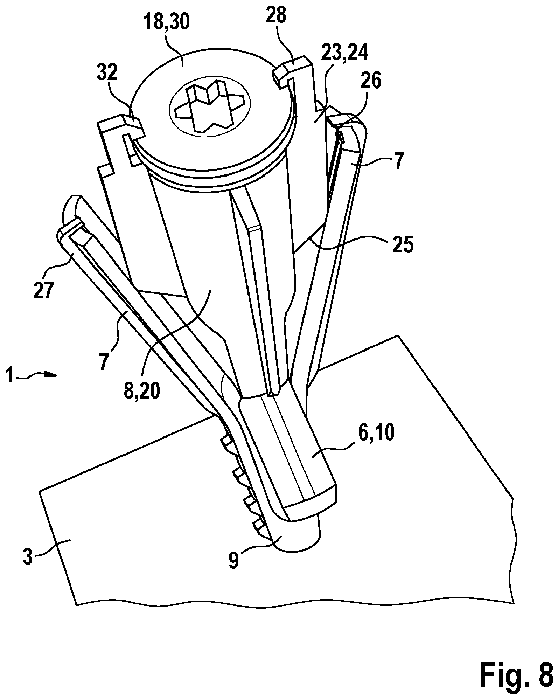

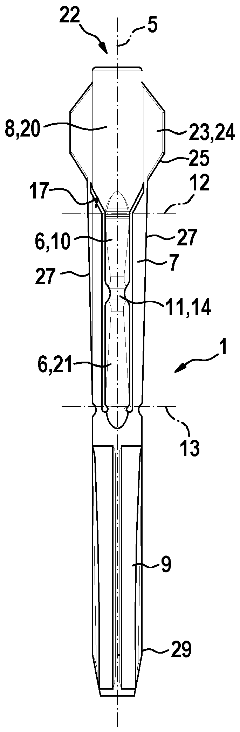

Damit das stiftförmige Befestigungselement 18 bereits vor dem Einbringen des Dämmstoffankers 1 in die Dämmstoffplatte 2 mit dem Dämmstoffanker 1 zu einem erfindungsgemäßen Befestigungssystem verliersicher verbunden werden kann, sind an zwei sich gegenüberliegenden Flügeln 24 der Schiebehülse 8 zwei nach hinten abstehende, hakenförmige Halteelemente 28 angeordnet. Wie dies in den Figuren 6 und 8 zu sehen ist, hintergreifen die beiden Halteelemente 28 einen Kopf 30 des Befestigungselements 18, der mit seiner Vorderseite auf dem hinteren Ende der Schiebehülse 8 aufliegt und somit verliersicher an der Schiebehülse 8 gehalten ist. Beim Einführen des stiftförmigen Befestigungselements in die Aufnahmeöffnung 22 trifft der Kopf 30 mit seiner Vorderseite auf Einführschrägen 32 des Halteelements 28, die dadurch radial nach außen gedrückt werden und den Weg für den Kopf 30 freigeben. Nachdem der Kopf 30 an den Halteelementen 28 vorbei ist, federn die Halteelemente 28 in ihre Ausgangsposition zurück und hintergreifen dann den Kopf 30. Da die Aufnahmeöffnung 22 als zylindrische Öffnung mit einem Durchmesser ausgeführt ist, die einen größeren Durchmesser als das Gewinde des Befestigungselements 18 aufweist, kann das Befestigungselement 18 in die Aufnahmeöffnung 22 eingeschoben werden, bis sein Kopf 30 auf die Halteelemente 28 trifft. Der erfindungsgemäße Dämmstoffanker 1 kann somit auf einfache Art und Weise mit einem beliebigen, auf den jeweiligen Werkstoff der Gebäudewand 3 abgestimmten Befestigungselement zu einem Befestigungssystem verbunden werden.

Die beiden dargestellten Dämmstoffanker 1 zeichnen sich durch einen sehr kleinen Querschnitt beim Einbringen des Dämmstoffankers 1 in die Dämmstoffplatte 2 aus. Die Dämmstoffplatte wird daher beim Einbringen des Dämmstoffankers 1 beziehungsweise des Befestigungssystems nicht oder nur wenig beschädigt, was das nachträgliche Aufbringen eines Putzes vereinfacht. Zudem erfolgt das Aufspreizen des Dämmstoffankers 1 ebenfalls innerhalb der Dämmstoffplatte 2, so dass auch hierdurch die Außenseite der Dämmstoffplatte 2, die zum Verputzen idealerweise eben und ohne Fehlstellen ist, nicht beeinträchtigt wird.

### Bezugszeichenliste

- 1: Dämmstoffanker
- 2: Dämmstoffplatte
- 3: Gebäudewand
- 4: Unterkonstruktion
- 5: Ankerachse
- 6: Kniehebel
- 7: Ankerelement
- 8: Schiebehülse
- 9: Festhülse
- 10: erstes Hebelelement
- 11: Kniegelenk
- 12: zweite Schwenkachse
- 13: dritte Schwenkachse
- 14: Nut
- 15: erste Schwenkachse
- 16: Sollbruchstelle
- 17: Schrägfläche
- 18: stiftförmiges Befestigungselement
- 19: Kreispfeil
- 20: Spreizelement
- 21: zweites Hebelelement
- 22: Aufnahmeöffnung
- 23: Verdrehsicherungselement
- 24: Flügel der Schiebehülse 8
- 25: Einführschräge des Flügels 24
- 26: Führungsnut
- 27: Verstärkungsrippe
- 28: Halteelement
- 29: Flügel der Festhülse 9
- 30: Kopf des Befestigungselements 18
- 31: Spitze des Befestigungselements 18
- 32: Einführschräge des Halteelements 28

## Patentansprüche

1. Dämmstoffanker (1) zu einer Verankerung in einer Dämmstoffplatte (2), mit einer Aufnahmeöffnung (22) zur Aufnahme eines stiftförmigen Befestigungselements (18), die sich entlang einer Ankerachse (5) erstreckt, und mit einem radial zu der Ankerachse (5) aufspreizbaren Kniehebel (6), der zwei Hebelelemente (10, 21) aufweist, die durch ein Kniegelenk (11) schwenkbar miteinander verbunden sind, wobei sich ein radialer Abstand des Kniegelenks (11) von der Ankerachse (5) bei einem Aufspreizen des Kniehebels (6) vergrößert, **dadurch gekennzeichnet, dass** der Dämmstoffanker (1) zusätzlich zum Kniehebel (6) ein um eine erste Schwenkachse (15) ausschwenkbares Ankerelement (7) und ein in Richtung der Ankerachse (5) verschiebbares Spreizelement (20) aufweist, mit dem das Ankerelement (7) zu einem keilartigen Aufspreizen durch eine Verschiebung des Spreizelements (20) und durch ein Gleiten zwischen dem Ankerelement (7) und dem Spreizelement (20) in einer Spreizrichtung von der Ankerachse (5) weg ausschwenkbar ist.

2. Dämmstoffanker (1) nach Anspruch 1, **dadurch gekennzeichnet, dass** der Dämmstoffanker (1) ein Paar einander bezüglich der Ankerachse (5) gegenüber angeordnete und in entgegengesetzten Richtungen aufspreizbare Kniehebel (6) und/oder ein Paar einander bezüglich der Ankerachse (5) gegenüber angeordnete und in entgegengesetzten Richtungen ausschwenkbare Ankerelemente (7) aufweist.

3. Dämmstoffanker (1) nach Anspruch 2, **dadurch gekennzeichnet, dass** die Kniehebel (6) in einer ersten Axialebene des Dämmstoffankers (1) und die Ankerelemente (7) in einer zweiten, zu der ersten Axialebene senkrechten, zweiten Axialebene des Dämmstoffankers (1) angeordnet sind.

4. Dämmstoffanker (1) nach einem oder mehreren der Ansprüche 1 bis 3, **dadurch gekennzeichnet, dass** der Dämmstoffanker (1) eine zu der Ankerachse (5) koaxiale und axial zur Ankerachse (5) verschiebbare Schiebehülse (8) als Spreizelement (20) aufweist.

5. Dämmstoffanker (1) nach einem der vorstehenden Ansprüche, **dadurch gekennzeichnet, dass** das Spreizelement (20) über eine Sollbruchstelle (16) mit dem Ankerelement (7) verbunden ist, die bei der Verschiebung der Schiebehülse (8) in der Spreizrichtung zerstört wird.

6. Dämmstoffanker (1) nach einem der vorstehenden Ansprüche, **dadurch gekennzeichnet, dass** das Spreizelement (20) gelenkig mit den Kniehebeln (6) verbunden ist.

7. Dämmstoffanker (1) nach einem der vorstehenden Ansprüche, **dadurch gekennzeichnet, dass** der Dämmstoffanker (1) eine zu der Ankerachse (5) koaxiale Festhülse (9) aufweist, mit der das Ankerelement (7) um die erste Schwenkachse (15) und ein zweites Hebelelement (21) der beiden Hebelelemente (10, 21) des Kniehebels (6) um eine dritte Schwenkachse (13) schwenkbar verbunden sind.

8. Dämmstoffanker (1) nach Anspruch 7, **dadurch gekennzeichnet, dass** der Kniehebel (6) die Schiebehülse (8) und die Festhülse (9) drehfest verbindet.

9. Dämmstoffanker (1) nach Anspruch 7 oder 8, **dadurch gekennzeichnet, dass** mit der Schiebehülse (8) ein erstes Hebelelement (10) der beiden Hebelelemente (10, 21) des Kniehebels (6) um eine zweite Schwenkachse (12) schwenkbar verbunden ist.

10. Dämmstoffanker (1) nach einem der vorstehenden Ansprüche, **dadurch gekennzeichnet, dass** das erste Hebelelement (10) der beiden Hebelelemente (10, 21), in axialer Richtung länger als das zweite Hebelelement (21) ist, wobei das erste Hebelelement (10) näher an der Schiebehülse (8) angeordnet ist als das zweite Hebelelement (21).

11. Dämmstoffanker (1) nach Anspruch 7 bis 10, **dadurch gekennzeichnet, dass** Festhülse (9), Schiebehülse (8), Kniehebel (6) und Ankerelement (7) einstückig hergestellt sind.

12. Dämmstoffanker (1) nach einem oder mehreren der Ansprüche 7 bis 11, **dadurch gekennzeichnet, dass** der Kniehebel (6) und das Ankerelement (7) zwischen der Festhülse (9) und der Schiebehülse (8) angeordnet sind.

13. Dämmstoffanker (1) nach einem der vorstehenden Ansprüche, **dadurch gekennzeichnet, dass** der Dämmstoffanker (1) am Spreizelement (20) ein Verdrehsicherungselement (23) aufweist, insbesondere ein Flügel (24) oder eine Rippe, an dem ein Halteelement (28) angeordnet ist, mit dem das stiftförmige Befestigungselement (18) in der Aufnahmeöffnung (22) des Dämmstoffankers (1) gehalten werden kann, wobei das Halteelement (28) in Umfangsrichtung insbesondere nicht breiter ist als das Verdrehsicherungselement (23) ist.

14. Befestigungssystem mit einem stiftförmigen Befestigungselement (18), insbesondere einem Nagel oder einer Schraube, und einem Dämmstoffanker (1) zu einer Verankerung in einer Dämmstoffplatte (2), insbesondere mit einem Dämmstoffanker (1) nach einem der vorstehenden Ansprüche, wobei der Dämmstoffanker (1) eine Aufnahmeöffnung (22) zur Aufnahme des stiftförmigen Befestigungselements (18) aufweist, die sich entlang der Ankerachse (5) erstreckt, und einen radial zu der Ankerachse (5) aufspreizbaren Kniehebel (6) und/oder ein um eine erste Schwenkachse (15) ausschwenkbares Ankerelement (7), **dadurch gekennzeichnet, dass** der Dämmstoffanker (1) ein Halteelement (28) aufweist, das das Befestigungselement (18) hintergreift, wenn das Befestigungselement (18) in der Aufnahmeöffnung (22) aufgenommen ist, und dadurch das das Befestigungselement (18) verliersicher in der Aufnahmeöffnung (22) hält.

15. Befestigungssystem nach Anspruch 14, **dadurch gekennzeichnet, dass** der Dämmstoffanker (1) ein Verdrehsicherungselement (23) aufweist, insbesondere ein Flügel (24) oder eine Rippe, insbesondere an einem Spreizelement (20), an dem das Halteelement (28) angeordnet ist, wobei das Halteelement (28) in Umfangsrichtung insbesondere nicht breiter ist als das Verdrehsicherungselement (23) ist.
